# EUROPEAN PATENT APPLICATION

(11) **EP 4 644 881 A1**
(43) Date of publication of application: **05.11.2025**
(21) Application number: 23910467.2
(22) Date of filing: 25.12.2023
(51) Int. Cl.: G01N 23/02

(54) **INSPECTION PASSAGE FOR CT INSPECTION AND CT INSPECTION APPARATUS**

(30) Priority: 28.12.2022 CN 202211696900
(71) Applicant: Tsinghua University, Haidian District, Beijing 100084 (CN); NUCTECH COMPANY LIMITED, Beijing 100084 (CN)
(72) Inventor: CHEN, Zhiqiang, Beijing 100084 (CN); ZHANG, Li, Beijing 100084 (CN); LI, Liang, Beijing 100084 (CN); HONG, Mingzhi, Beijing 100084 (CN); WANG, Zinan, Beijing 100084 (CN); XIA, Yongjie, Beijing 100084 (CN)
(74) Representative: Gunzelmann, Rainer
(86) International application number: PCT/CN2023/141476
(87) International publication number: WO 2024/140541

(57) **Abstract**

A detection channel (100) for CT detection and a CT detection device (1000). The detection channel (100) includes: at least two base pipes (11) and a carbon fiber connector (12). Each base pipe (11) is a metal component with both ends of the base pipe (11) open, the at least two base pipes (11) are distributed sequentially in a length direction of the detection channel (100), cavities of the at least two base pipes (11) are connected sequentially to allow an object to be detected to pass through, two base pipes (11) are spaced apart from each other in the length direction, and a radiation gap (10) is defined between the two base pipes (11); the carbon fiber connector (12) extends in the length direction, a middle part of the carbon fiber connector (12) is located within the radiation gap (10), two ends of the carbon fiber connector (12) are at least fixedly connected to the base pipes (11) on both sides of the radiation gap (10) respectively, and the carbon fiber connector (12) is a solid rod or a pipe body.

## Description

This application claims priority to Chinese Patent Application No. 202211696900.5, filed on December 28, 2022, the entire content of which is incorporated herein in its entirety by reference.

### TECHNICAL FIELD

The present disclosure relates to a field of radiation detection, and in particular to a detection channel for CT detection and a CT detection device.

### BACKGROUND

CT detection is widely used in industrial product detection. In CT detection, an object to be detected enters a CT detection device from one end of the CT detection device and leaves the CT detection device from the other end of the CT detection device. During the detection process, a space where the object to be detected moves is a detection channel of the CT detection device. The structural strength of the detection channel and the transmittance of the ray directly affect the smooth movement of the object to be detected and the detection effect of the ray on the object to be detected.

### SUMMARY

According to an embodiment of the present disclosure, a detection channel for CT detection is provided, including: at least two base pipes, where each base pipe of the at least two base pipes is a metal component with both ends of the base pipe open, the at least two base pipes are distributed sequentially in a length direction of the detection channel, cavities of the at least two base pipes are connected sequentially to allow an object to be detected to pass through, two of the at least two base pipes are spaced apart from each other in the length direction of the detection channel, and a radiation gap is defined between the two of the at least two base pipes; and a carbon fiber connector extending in the length direction of the detection channel, where a middle part of the carbon fiber connector is located within the radiation gap, two ends of the carbon fiber connector are at least fixedly connected to the base pipes on both sides of the radiation gap respectively, and the carbon fiber connector is a solid rod or a pipe body.

In some embodiments, the carbon fiber connector is a profile component.

In some embodiments, the carbon fiber connector is a square pipe, a circular pipe, or an I-shaped pipe.

In some embodiments, the detection channel for CT detection includes a plurality of carbon fiber connectors, and the plurality of carbon fiber connectors are distributed at intervals sequentially in a circumferential direction of the base pipe.

In some embodiments, an inner bottom portion of the base pipe is provided with two supporting plates, each of the two supporting plates extends in the length direction of the detection channel, the two supporting plates are distributed at intervals in a width direction of the base pipe, and the two supporting plates are configured to support a conveyor belt; and each supporting plate of the two supporting plates is connected to the carbon fiber connector below the supporting plate.

Furthermore, a pipe wall of the base pipe includes: a lower lateral wall plate provided laterally; an upper lateral wall plate provided laterally above the upper lateral wall plate; two upper side wall plates provided vertically, where upper ends of the two upper side wall plates are respectively connected to opposite ends of the upper lateral wall plate; two lower side wall plates provided vertically, where lower ends of the two lower side wall plates are respectively connected to opposite ends of the lower lateral wall plate; and two side lateral plates provided laterally, where the two side lateral plates correspond to the two upper side wall plates, and opposite ends of each of the two side lateral plates are connected between the corresponding upper side wall plate and lower side wall plate; and the supporting plate is connected to the side lateral plate, and the carbon fiber connector is in contact with the supporting plate and the lower side wall plate.

Furthermore, the two supporting plates are suspended above the lower lateral wall plate, any one of two carbon fiber connectors is connected to the supporting plate on a side of the any one of the two carbon fiber connectors away from the other of the two carbon fiber connectors, and the carbon fiber connector is suspended above the lower lateral wall plate.

In some specific embodiments, any one of the two of the at least two base pipes is provided with a sleeve at an end of the any one of the two of the at least two base pipes facing the other of the two of the at least two base pipes, the sleeve is connected to an outside of the base pipe, two sleeves of the two of the at least two base pipes are located on both sides of the radiation gap, and the two sleeves are circular pipes and coaxial.

Furthermore, a plurality of reinforcing ribs are connected between the base pipe and the sleeve.

Furthermore, the sleeve is a metal component.

In some specific embodiments, more than one base pipes are provided on at least one side of the radiation gap, and the carbon fiber connector is fixedly connected to each of the more than one base pipes; and two adjacent base pipes on a same side of the radiation gap are connected by welding or a fastener.

According to an embodiment of the present disclosure, a CT detection device is provided, including the detection channel for CT detection in any one of the above embodiments.

In some embodiments, the CT detection device further includes: a supporting frame provided with a bearing mounting hole; a slip ring bearing arranged in the bearing mounting hole; and a rotating frame provided with a radiation source and a detector, where the rotating frame is connected to the slip ring bearing so that the rotating frame is rotatable relative to a main body portion, and the detection channel is arranged in a mounting space of the rotating frame.

The additional aspects and advantages of the present disclosure will be partially provided in the following description, which will become clear from the following description, or will be learned through the practice of the present disclosure.

### BRIEF DESCRIPTION OF THE DRAWINGS

The above-mentioned and/or additional aspects and advantages of the present disclosure will become clear and easy to be understood from the description of embodiments in conjunction with the accompanying drawings, in the drawings:
FIG. 1 is a main side view of a detection channel according to an embodiment of the present disclosure;
FIG. 2 is a main side view of a detection channel according to another embodiment of the present disclosure;
FIG. 3 is a side view of the detection channel in the embodiment shown in FIG. 2;
FIG. 4 is a front view of the detection channel in the embodiment shown in FIG. 2;
FIG. 5 is an enlarged structural diagram of a portion shown at location A in FIG. 4;
FIG. 6 is a front view of a CT detection device according to an embodiment of the present disclosure; and
FIG. 7 is a side view of the CT detection device in the embodiment shown in FIG. 6.

Reference signs:
CT detection device 1000,
Detection channel 100,
Radiation gap 10,
Base pipe 11, lower lateral wall plate 111, upper lateral wall plate 112, upper side wall plate 113, lower side wall plate 114, side lateral plate 115,
Carbon fiber connector 12, supporting plate 13, sleeve 14, reinforcing rib 15,
Supporting frame 200,
Rotating frame 300, radiation source 310, detector 320.

### DETAILED DESCRIPTION OF EMBODIMENTS

Embodiments of the present disclosure are described in detail in the following. Examples of embodiments are shown in the accompanying drawings, where the same or similar reference signs throughout indicate the same or similar components or components with same or similar functions. Embodiments described below with reference to the accompanying drawings are illustrative and intended only to explain the present disclosure, and cannot be understood as a limitation of the present disclosure.

In the description of the present disclosure, it should be understood that the terms "length", "thickness", "up", "down", "left", "right", "vertical", "inside", "outside", "circumferential", etc. indicate the orientation or position relationship based on the orientation or position relationship shown in the drawings, only for the convenience of describing and simplifying the description of the present disclosure, rather than indicating or implying that the device or component referred to must have a specific orientation and be constructed and operated in a specific orientation, therefore cannot be understood as a limitation of the present disclosure. In addition, features defined with "first" and "second" may explicitly or implicitly include one or more of these features. In the description of the present disclosure, unless otherwise specified, "plurality of" means two or more.

In the description of the present disclosure, it should be noted that unless otherwise specified and defined, the terms "mounting", "connection", and "connected" should be broadly understood, for example, it may be fixed connections, detachable connections, or integrated connections; it may be a mechanical connection or an electrical connection; it may be directly connected, or indirectly connected through an intermediate medium, or it may be an internal connection between two components. Those ordinary skilled in the art may understand the specific meanings of the above terms in the present disclosure based on specific circumstances.

The present disclosure provides a detection channel for CT detection, which may reduce the production cost of the detection channel while ensuring that the detection channel has high structural rigidity.

According to embodiments of the present disclosure, the detection channel for CT detection may reduce the production cost of the detection channel while ensuring that the detection channel has high structural rigidity, on the premise of ensuring the detection effect of the ray on the object to be detected.

The present disclosure further provides a CT detection device with the detection channel as described above.

By using the detection channel for CT detection in above embodiments, the CT detection device according to embodiments of the present disclosure may reduce the production cost of the detection channel while ensuring that the detection channel has high structural rigidity, thereby further ensuring the detection effect of the CT detection device and reducing the production cost of the CT detection device.

A detection channel 100 for CT detection and a CT detection device 1000 according to embodiments of the present disclosure are described below with reference to the accompanying drawings.

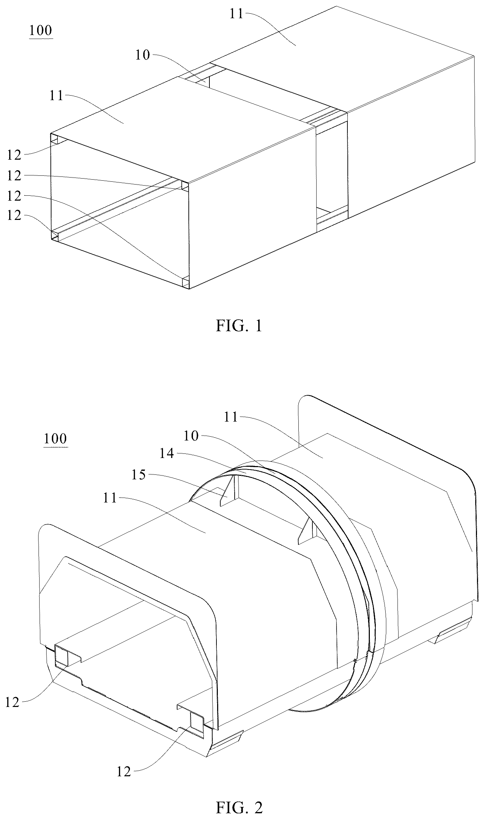

As shown in FIGS. 1 to 3, the detection channel 100 for CT detection according to embodiments of the present disclosure includes at least two base pipes 11 and a carbon fiber connector 12.

It should be noted that, a ray is used to detect an object to be detected in the CT detection. In CT detection, during the process of the object to be detected passing through the detection channel 100, the ray is emitted on an outer side of the detection channel 100, and the ray is concentrated in a cross-section of the detection channel 100 in the length direction of the detection channel 100 and passes through the detection channel 100. During the process of the object to be detected passing through the above cross-section, the ray penetrates the object to be detected to achieve the detection of the object to be detected.

It may be understood that, since the ray irradiates on the object to be detected after passing through the detection channel 100, the obstruction of the ray by the detection channel 100 directly affects the ray intensity required for detection and the detection effect on the object to be detected. In relevant construction solutions of the detection channel 100, a carbon fiber material or metal material is used to construct the detection channel 100. The transmittance of the ray in the carbon fiber material is relatively high, while the transmittance of the ray in the metal material is relatively low.

In related art, there are different construction solutions for the detection channel 100. In some solutions, a full carbon fiber structure is used to form the detection channel 100. In such solution, the structure of the detection channel 100 has high rigidity, and the transmittance of the ray on the detection channel 100 of full carbon fiber is relatively high, which may ensure the detection effect of the ray on the object to be detected. However, the structure of full carbon fiber needs to be formed in one molding during processing, and detection channels 100 of different structures need to use different molds. The detection channel 100 is a long-term device, and the number of manufactured detection channels 100 of the same model is usually small, resulting in a high manufacturing cost for a single detection channel 100.

In some other solutions, a structure in which metal channels are connected to both ends of a carbon fiber channel is used, where a beam surface of the ray is located within the range of the carbon fiber channel, which may ensure the detection effect of the ray on the object to be detected. However, in such structure, since a cantilever structure is required for the metal channels at both ends of the carbon fiber channel, the manufacturing and assembly error is relatively large and the assembly accuracy requirement is high, leading to difficulty in ensuring the process. While due to the use of connecting structures at multiple positions, the rigidity of the overall structure of the detection channel 100 is also poor.

In the detection channel 100 of the present disclosure, the base pipe 11 is a metal component with both ends of the base pipe open. All the base pipes 11 are distributed sequentially in the length direction of the detection channel 100, cavities of all the base pipes 11 are connected sequentially to allow the object to be detected to pass through. Two base pipes 11 are spaced apart from each other in the length direction of the detection channel 100, and a radiation gap 10 is defined between the two base pipes 11.

In this way, all the base pipes 11 along with the radiation gap 10 constitute the movement channel of the object to be detected. During CT detection, the ray irradiates and passes through the detection channel 100 from the radiation gap 10, and the ray is not blocked by the base pipe 11, achieving a good detection effect at a lower ray intensity. While the ray does not pass through the detection channel 100 from the base pipe 11, so that the base pipe 11 which uses the metal component does not block the ray and affect the detection effect. Compared to using a carbon fiber component, the metal component may be used to reduce the material cost of the detection channel 100.

In addition, a carbon fiber connector 12 extends in the length direction of the detection channel 100. A middle part of the carbon fiber connector 12 is located within the radiation gap 10, and two ends of the carbon fiber connector 12 are at least fixedly connected to the base pipes 11 on both sides of the radiation gap 10 respectively. The carbon fiber connector 12 is a solid rod or a pipe body.

It may be understood that, the carbon fiber connector 12 is used to connect the base pipes 11 on both sides of the radiation gap 10. The carbon fiber connector 12 is used to fix and connect the base pipes 11 on both sides, so that the openings of the base pipes 11 on both sides are arranged facing each other, ensuring the assembly accuracy of the detection channel 100 and improving the structural rigidity of the detection channel 100.

In such structure, due to the high transmittance of ray in the carbon fiber, a middle part of the carbon fiber connector 12 located in the radiation gap 10 provides less block to the ray, thereby ensuring the detection effect on the object to be detected under low intensity ray.

There are many standard components of different sizes available on the market for the carbon fiber connectors 12 with solid rod or pipe body structures, which allows for the direct purchase of carbon fiber connectors 12 required for the detection channel 100 from the market. This saves the cost of mold processing for carbon fiber structures, thereby reducing the overall production cost of the detection channel 100.

The detection channel 100 of the present disclosure reduces the production cost of the detection channel 100 while ensuring that the detection channel 100 has high structural rigidity, on the premise of ensuring the detection effect of the ray on the object to be detected.

It should be noted that, the fixed connection method of the carbon fiber connector 12 on the base pipe 11 is not limited in the present disclosure. For example, the carbon fiber connector 12 is fixed connected to the base pipe 11 by a bolt.

In some embodiments, the carbon fiber connector 12 is a profile component. In this way, the carbon fiber connector 12 has relatively high structural strength and modulus, so that the carbon fiber connector 12 has good vibration attenuation and wear resistance, ensuring that the detection channel 100 may maintain relatively high structural reliability under long-term use.

In some embodiments, the carbon fiber connector 12 is a square pipe, a circular pipe, or an I-shaped pipe.

It may be understood that, each of the square pipe, the circular pipe, or the I-shaped pipe has good load-bearing capacity and bending resistance, ensuring that the base pipe 11 has relatively high reliability through the fixed connection of the carbon fiber connector 12.

In the actual use of carbon fiber connector 12, a corresponding carbon fiber connector 12 is used according to the shape of the base pipe 11, which may increase the contact area between the carbon fiber connector 12 and the base pipe 11, thereby improving the connection reliability between the carbon fiber connector 12 and the base pipe 11. For example, in the example in FIG. 1, the base pipe 11 is a square pipe, and accordingly, the carbon fiber connector 12 is also a square pipe. At this point, the contact area between the base pipe 11 and the carbon fiber connector 12 is relatively large, so that the connection between the base pipe 11 and the carbon fiber connector 12 is reliable.

Each of the square pipe, the circular pipe, or the I-shaped pipe is a hollow structure, which may reduce the amount of carbon fiber used, thereby lowering the cost of the carbon fiber connector 12.

In some embodiments, as shown in FIGS. 1, 2, and 4, the detection channel for CT detection includes a plurality of carbon fiber connectors 12, and the plurality of carbon fiber connectors 12 are distributed at intervals sequentially in a circumferential direction of the base pipe 11. It may be understood that, the reliability of the connection between the carbon fiber connector 12 and the base pipe 11 may be improved by connecting at least two carbon fiber connectors 12 to the base pipe 11, thereby avoiding rotation of the base pipe 11 around one carbon fiber connector 12 as an axis.

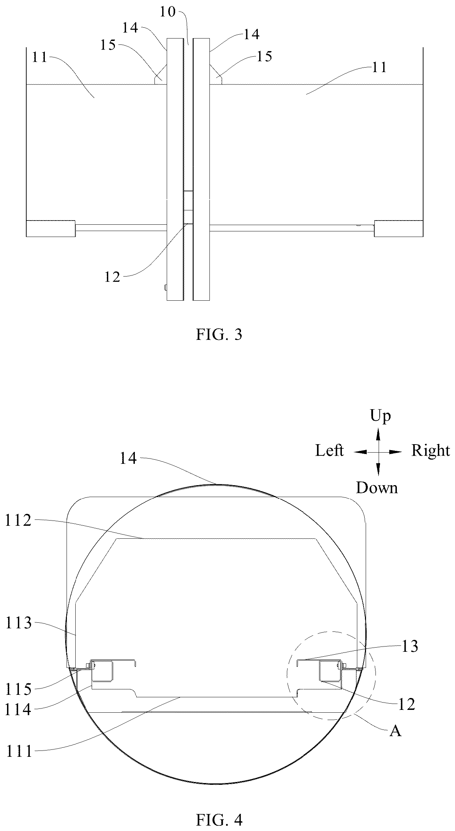

For example, in the example of FIG. 1, the base pipe 11 is a square pipe, and the number of base pipes is two. The detection channel 100 uses four carbon fiber connectors 12 to be connected to the four corners of the base pipe 11 respectively, ensuring the reliable fixation of the two base pipes 11. For another example, in the examples in FIGS. 2 and 4, two base pipes 11 are connected through two carbon fiber connectors 12, which may also ensure the reliable fixation of the two base pipes 11.

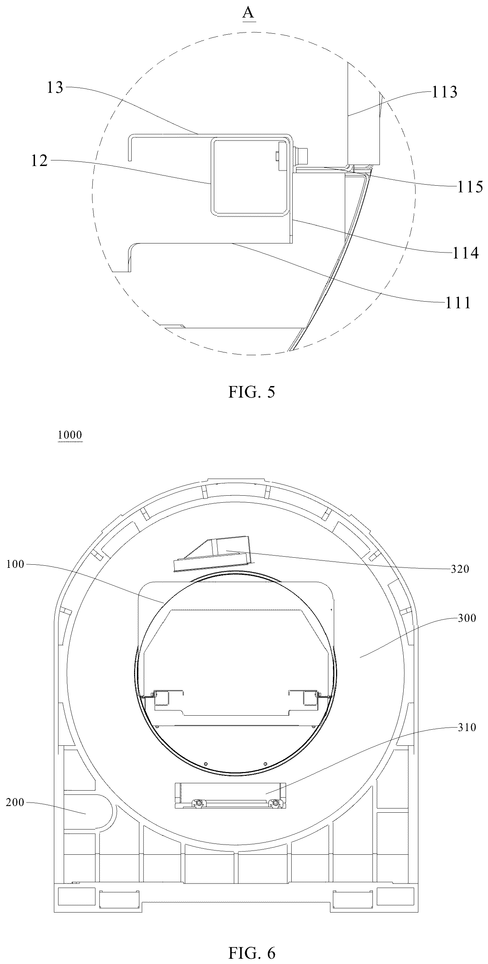

In some embodiments, as shown in FIGS. 4 and 5, an inner bottom portion of the base pipe 11 is provided with two supporting plates 13, and each of the two supporting plates 13 extends in the length direction of the detection channel 100. Two supporting plates 13 are distributed at intervals in a width direction of the base pipe 11, and the two supporting plates 13 are used to support a conveyor belt. Each supporting plate 13 is connected to the carbon fiber connector 12 below that supporting plate 13. In this way, the carbon fiber connector 12 provides a vertical support to the supporting plate 13, and the supporting plate 13 provides a support to the conveyor belt, so that the conveyor belt may not be deformed downwards when bearing the weight of the object to be detected, ensuring that the conveyor belt may move along the upper surface of the supporting plate 13, thereby stably driving the object to be detected to move in the length direction of the detection channel 100.

Furthermore, a pipe wall of the base pipe 11 includes: a lower lateral wall plate 111, an upper lateral wall plate 112, two upper side wall plates 113, two lower side wall plates 114, and two side lateral plates 115.

The lower lateral wall plate 111 is provided laterally. The upper lateral wall plate 112 is provided laterally above the upper lateral wall plate 112. The upper side wall plates 113 are provided vertically, and upper ends of the two upper side wall plates 113 are respectively connected to opposite ends of the upper lateral wall plate 112. The lower side wall plates 114 are provided vertically, and lower ends of the two lower side wall plates 114 are respectively connected to opposite ends of the lower lateral wall plate 111. The side lateral plates 115 are provided laterally, two side lateral plates 115 correspond to the two upper side wall plates 113, and opposite ends of each side lateral plate 115 are connected between the corresponding upper side wall plate 113 and lower side wall plate 114. In addition, the supporting plate 13 is connected to the side lateral plate 115, and the carbon fiber connector 12 is in contact with the supporting plate 13 and the lower side wall plate 114.

In such structure, the side lateral plate 115 and the lower side wall plate 114 form a step structure. The side lateral plate 115 may form a connecting platform for the supporting plate 13 and provide a vertical support to the supporting plate 13, while the lower side wall plate 114 may provide a relatively large connection area for the carbon fiber connector 12, so that the carbon fiber connector 12 may be connected to both the lower side wall plate 114 and the supporting plate 13. Therefore, the supporting plate 13 may have good load-bearing capacity, thereby improving the stability of the movement of the object to be detected on the conveyor belt.

It should be noted that, the shape of each of the lower lateral wall plate 111, the upper lateral wall plate 112, the upper side wall plate 113, the lower side wall plate 114, and the side lateral plate 115 is not limited in the present disclosure. The shape of each plate may be set according to the structure of the corresponding detection device, and not limited to the flat plate. For example, in the examples of FIGS. 2, 4, and 6, the upper lateral wall plate 112 is a bent plate, that is, both ends of the upper lateral wall plate 112 in the width direction (shown as the left and right directions in the figure) of the upper lateral wall plate 112 are bent downwards. In such structure, the detection channel 100 is placed in the circular cavity of the CT detection device 1000, which may increase the accommodating space of the detection channel 100, so that a larger volume of the object to be detected may pass through the detection channel 100.

Furthermore, two supporting plates 13 are suspended above the lower lateral wall plate 111. Any one of two carbon fiber connectors 12 is connected to the supporting plate 13 on a side of the any one of the two carbon fiber connectors 12 away from the other of the two carbon fiber connectors 12. The carbon fiber connector 12 is suspended above the lower lateral wall plate 111.

It may be understood that, the conveyor belt may be divided into upper and lower sections separated in the middle, with the upper and lower sections moving in opposite directions, and the upper section of the conveyor belt is supported on the supporting plate 13. In such structure, there is a certain space between the carbon fiber connector 12 and the lower lateral wall plate 111, which may accommodate the lower section of the conveyor belt, thereby ensuring the continuous operation of the conveyor belt.

In some specific embodiments, as shown in FIGS. 2 and 3, any one of two base pipes 11 is provided with a sleeve 14 at an end of the any one of the two base pipes 11 facing the other of the two base pipes 11. The sleeve 14 is connected to an outside of the base pipe 11. Two sleeves 14 of the two base pipes 11 are located on both sides of the radiation gap 10, and the two sleeves 14 are circular pipes and coaxial.

It may be understood that, during the CT detection process, there is a risk of some rays irradiating outside the detection channel 100 due to the vibration of the CT detection device 1000.

In this way, the sleeve 14 may be cooperated with the detection cavity of the CT detection device 1000. The gap between the sleeve 14 and the CT detection device 1000 is relatively small, so that the beam surface of the ray may be limited within the radiation gap 10, reducing the amount of ray direct irradiating outside the detection channel 100, thereby reducing the harm of the ray to the detection personnel in CT detection and improving the safety of CT detection.

It should be noted that, the shape of the sleeve 14 is not limited in the present disclosure. For example, in the examples of FIGS. 2 and 3, the detection channel 100 is used for the CT detection device 1000 with a cylindrical detection cavity, and the sleeve 14 is correspondingly provided to be cylindrical, so that the sleeve 14 may be cooperated with the cylindrical detection cavity of the CT detection device 1000, thereby reducing ray leakage.

In addition, since the shape of the sleeve 14 is cooperated with the detection cavity of the CT detection device 1000, when the detection channel 100 is mounted on the CT detection device 1000, the mounting position of the detection channel 100 on the CT detection device 1000 may be quickly determined through the position of the sleeve 14 in the detection cavity, thereby facilitating the mounting of the detection channel 100 on the CT detection device 1000.

Furthermore, a plurality of reinforcing ribs 15 are connected between the base pipe 11 and the sleeve 14. In this way, the reinforcing rib 15 may improve the connection strength between the sleeve 14 and the base pipe 11, ensuring that the sleeve 14 is reliably fixed and connected to the base pipe 11.

Furthermore, the sleeve 14 is a metal component. It may be understood that, the transmittance of the ray in the metal material is relatively low. Using the metal component as the sleeve 14 may reduce the amount of rays transmitted to outside the detection channel 100 through the sleeve 14, thereby further reducing the amount of rays irradiating outside the detection channel 100.

In some specific embodiments, more than one base pipes 11 are provided on at least one side of the radiation gap 10, and the carbon fiber connector 12 is fixedly connected to each base pipe 11.

In this way, all base pipes 11 on the same side of the radiation gap 10 may be aligned one by one along the detection channel 100 under the fixed action of the carbon fiber connector 12, so that the openings of adjacent two base pipes 11 are facing each other, thereby reducing or avoiding the object to be detected getting stuck between the two base pipes 11 when moving in the detection channel 100.

While two adjacent base pipes 11 on a same side of the radiation gap 10 are connected by welding or a fastener, which may improve the stability of the connection between two adjacent base pipes 11 on the same side, thereby enhancing the overall structural stability of the detection channel 100.

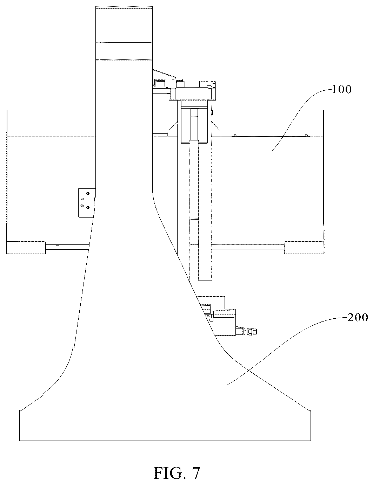

As shown in FIGS. 6 and 7, the CT detection device 1000 according to embodiments of the present disclosure includes the detection channel 100 for CT detection in any of the above embodiments.

By using the detection channel 100 for CT detection in above embodiments, the CT detection device 1000 of the present disclosure may reduce the production cost of the detection channel 100 while ensuring that the detection channel 100 has high structural rigidity, thereby further ensuring the detection effect of the CT detection device 1000 and reducing the production cost of the CT detection device 1000.

In some embodiments, as shown in FIGS. 6 and 7, the CT detection device 1000 further includes: a supporting frame 200, a slip ring bearing, and a rotating frame 300.

The supporting frame 200 is provided with a bearing mounting hole. The slip ring bearing is arranged in the bearing mounting hole. The rotating frame 300 is provided with a radiation source 310 and a detector 320. The rotating frame 300 is connected to the slip ring bearing so that the rotating frame 300 is rotatable relative to a main body portion. The detection channel 100 is arranged in a mounting space of the rotating frame 300.

In this way, the rotating frame 300 may drive the radiation source 310 and the detector 320 to rotate relative to the main body portion, so that the radiation source 310 and the detector 320 may be used to detect at different angles, thereby improving the detection effect of the CT detection device 1000.

The other components and operations of the detection channel 100 for CT detection and the CT detection device 1000 according to embodiments of the present disclosure are known to those ordinary skilled in the art, which will not be described in detail here.

In the description of this specification, descriptions in reference of the terms "embodiment", "specific embodiment", "example", etc. refer to that the specific features, structures, materials, or characteristics described in conjunction with the embodiment or example are included in at least one embodiment or example of the present disclosure. In this specification, the illustrative expressions of the above terms may not necessarily refer to the same embodiment or example. Moreover, the specific features, structures, materials, or characteristics described may be combined in an appropriate manner in any one or more embodiments or examples.

Although embodiments of the present disclosure have been shown and described, those ordinary skilled in the art may understand that various changes, modifications, substitutions, and variations may be made to these embodiments without departing from the principles and purposes of the present disclosure, and the scope of the present disclosure is defined by the claims and their equivalents.

## Claims

1. A detection channel for CT detection, comprising:
at least two base pipes (11), wherein each base pipe of the at least two base pipes (11) is a metal component with both ends of the base pipe open, the at least two base pipes (11) are distributed sequentially in a length direction of the detection channel (100), cavities of the at least two base pipes (11) are connected sequentially to allow an object to be detected to pass through, two of the at least two base pipes (11) are spaced apart from each other in the length direction of the detection channel (100), and a radiation gap (10) is defined between the two of the at least two base pipes (11); and
a carbon fiber connector (12) extending in the length direction of the detection channel (100), wherein a middle part of the carbon fiber connector (12) is located within the radiation gap (10), two ends of the carbon fiber connector (12) are at least fixedly connected to the base pipes (11) on both sides of the radiation gap (10) respectively, and the carbon fiber connector (12) is a solid rod or a pipe body.

2. The detection channel for CT detection according to claim 1, wherein the carbon fiber connector (12) is a profile component.

3. The detection channel for CT detection according to claim 1, wherein the carbon fiber connector (12) is a square pipe, a circular pipe, or an I-shaped pipe.

4. The detection channel for CT detection according to claim 1, wherein the detection channel for CT detection comprises a plurality of carbon fiber connectors (12), and the plurality of carbon fiber connectors (12) are distributed at intervals sequentially in a circumferential direction of the base pipe (11).

5. The detection channel for CT detection according to claim 1, wherein an inner bottom portion of the base pipe (11) is provided with two supporting plates (13), each of the two supporting plates (13) extends in the length direction of the detection channel (100), the two supporting plates (13) are distributed at intervals in a width direction of the base pipe (11), and the two supporting plates (13) are configured to support a conveyor belt; and
wherein each supporting plate of the two supporting plates (13) is connected to the carbon fiber connector (12) below the supporting plate (13).

6. The detection channel for CT detection according to claim 5, wherein a pipe wall of the base pipe (11) comprises:
a lower lateral wall plate (111) provided laterally;
an upper lateral wall plate (112) provided laterally above the upper lateral wall plate (112);
two upper side wall plates (113) provided vertically, wherein upper ends of the two upper side wall plates (113) are respectively connected to opposite ends of the upper lateral wall plate (112);
two lower side wall plates (114) provided vertically, wherein lower ends of the two lower side wall plates (114) are respectively connected to opposite ends of the lower lateral wall plate (111); and
two side lateral plates (115) provided laterally, wherein the two side lateral plates (115) correspond to the two upper side wall plates (113), and opposite ends of each of the two side lateral plates (115) are connected between the corresponding upper side wall plate (113) and lower side wall plate (114);
wherein the supporting plate (13) is connected to the side lateral plate (115), and the carbon fiber connector (12) is in contact with the supporting plate (13) and the lower side wall plate (114).

7. The detection channel for CT detection according to claim 6, wherein the two supporting plates (13) are suspended above the lower lateral wall plate (111), any one of two carbon fiber connectors (12) is connected to the supporting plate (13) on a side of the any one of the two carbon fiber connectors (12) away from the other of the two carbon fiber connectors (12), and the carbon fiber connector (12) is suspended above the lower lateral wall plate (111).

8. The detection channel for CT detection according to any one of claims 1 to 7, wherein any one of the two of the at least two base pipes (11) is provided with a sleeve (14) at an end of the any one of the two of the at least two base pipes (11) facing the other of the two of the at least two base pipes (11), the sleeve (14) is connected to an outside of the base pipe (11), two sleeves (14) of the two of the at least two base pipes (11) are located on both sides of the radiation gap (10), and the two sleeves (14) are circular pipes and coaxial.

9. The detection channel for CT detection according to claim 8, wherein a plurality of reinforcing ribs (15) are connected between the base pipe (11) and the sleeve (14).

10. The detection channel for CT detection according to claim 8, wherein the sleeve (14) is a metal component.

11. The detection channel for CT detection according to any one of claims 1 to 7, wherein more than one base pipes (11) are provided on at least one side of the radiation gap (10), and the carbon fiber connector (12) is fixedly connected to each of the more than one base pipes; and
wherein two adjacent base pipes (11) on a same side of the radiation gap (10) are connected by welding or a fastener.

12. A CT detection device, comprising the detection channel (100) for CT detection according to any one of claims 1 to 11.

13. The CT detection device according to claim 12, further comprising:
a supporting frame (200) provided with a bearing mounting hole;
a slip ring bearing arranged in the bearing mounting hole; and
a rotating frame (300) provided with a radiation source (310) and a detector (320), wherein the rotating frame (300) is connected to the slip ring bearing so that the rotating frame (300) is rotatable relative to a main body portion, and the detection channel (100) is arranged in a mounting space of the rotating frame (300).
